# EUROPÄISCHE PATENTANMELDUNG

(11) **EP 0 650 968 A1**
(43) Veröffentlichungstag der Anmeldung: **03.05.1995**
(21) Anmeldenummer: 94115630.9
(22) Anmeldetag: 05.10.1994
(51) Int. Cl.: C07F 7/08

(54) **Verfahren zur kontinuierlichen Herstellung wässriger Alkali-Alkylsiliconatlösungen**

(30) Priorität: 27.10.1993 DE 4336600
(71) Anmelder: CHEMIEWERK NÜNCHRITZ GmbH, D-01610 Nünchritz (DE)
(72) Erfinder: Nitz, Thomas, Dipl.-Ing., D-01612 Nünchritz (DE); May, Wilfried, D-01612 Nünchritz (DE); Korneli, Wolfgang, D-01612 Nünchritz (DE); Jentsch, Leonore, D-01612 Nünchritz OT Grödel (DE)
(74) Vertreter: Zöllner, Gudrun

(57) **Zusammenfassung**

Die Erfindung betrifft ein Verfahren zur kontinuierlichen Herstellung wäßriger Alkali-Alkylsiliconatlösungen aus Organotrichlorsilanen über das Zwischenprodukt Organotrialkoxysilan. Die wasserlöslichen Alkali-Alkylsiliconate finden hauptsächlich Anwendung als Bautenschutzmittel.
Erfindungsgemäß wird Organotrichlorsilan in einer ersten Stufe in einem Reaktor mit 10 bis 100 Gew.-% Alkohol, dann in einer zweiten Stufe in einer Kolonne mit der restlichen zur äquimolaren Veresterung erforderlichen Menge an Alkohol und anschließend das Veresterungsprodukt in einer dritten Stufe in einem Mischreaktor mit Alkalilauge umgesetzt, sowie überschüssiger Alkohol aus dem Reaktionsprodukt abgetrennt und in Stufe eins zurückgeführt.
Die erfindungsgemäß hergestellten Produkte sind praktisch chlorfrei, klar und in jedem Verhältnis mit Wasser mischbar.

## Beschreibung

Die Erfindung betrifft die kontinuierliche Herstellung wäßriger Alkali-Alkylsiliconatlösungen aus Organotrichlorsilanen über das Zwischenprodukt Organotrialkoxysilan. Die wasserlöslichen Alkali-Alkylsiliconate finden hauptsächlich Anwendung als Bautenschutzmittel.

Alkali-Alkylsiliconatlösungen werden üblicherweise durch Hydrolyse von Methyltrichlorsilan hergestellt, wobei die anfallende Methylkieselsäure abfiltriert, mit Wasser gewaschen und mit Alkalilauge zu Alkalisiliconat umgesetzt wird. Diese Umsetzung ist unvollständig, erfordert eine Nachbehandlung des entstandenen trüben Produktes sowie die Aufarbeitung des anfallenden Waschwassers.

In der DE-PS 11 76 137 wird vorgeschlagen, zur Herstellung besonders alkalichloridfreier Alkali-Alkylsiliconate die Methylkieselsäure mittels Säurezugabe aus dem Alkalisiliconat auszufällen. Diese ausgefällte Methylkieselsäure ist nicht stabil und muß sofort weiterverarbeitet werden.

Die US-PS 4 252 569 beschreibt ein Verfahren, welches von Chlorsilanen ausgeht, die mit einem Wasser-Alkohol-Gemisch umgesetzt werden. Der Chlorwasserstoff wird dabei durch mehrfaches Aufheizen und Abkühlen entfernt. Das entstandene oligomere Produkt reagiert dann, nach Abtrennung der sauren, alkoholischen Phase, mit Alkalilauge zum Alkali-Alkylsiliconat. Das Verfahren ist technologisch aufwendig und kontinuierlich nicht durchführbar, was insbesondere die Verwertung des anfallenden Chlorwasserstoffes erschwert.

Die Umsetzung von Organoalkoxypolysiloxanen mit Kali- oder Natronlauge wird in der EP-PS 015 366 beschrieben. Die höhermolekularen Ausgangstoffe sind nur mit Alkalilaugen eines bestimmten Konzentrationsbereiches zu verwertbaren Produkten umsetzbar. Auch dieses Verfahren ist kontinuierlich nicht durchführbar.

Aufgabe der Erfindung war die Herstellung wäßriger Alkali-Alkylsiliconatlösungen mittels eines kontinuierlichen, abproduktfreien Verfahrens, welches, ausgehend von Organotrichlorsilanen, ohne Bildung von Feststoffen, Gelen oder den technologischen Ablauf störender, nichtmischbarer Lösungsmittel durchführbar ist.

Überraschenderweise wurde gefunden, daß die Herstellung wäßriger Alkali-Alkylsiliconatlösungen kontinuierlich durchführbar ist, wenn die Organotrichlorsilane vor der Umsetzung mit Alkalilauge in zwei Stufen mittels Alkohol so verestert werden, daß vorrangig monomere Organotrialkoxysilane entstehen.

Erfindungsgemäß wird
a) in einer ersten Stufe Organotrichlorsilan in einem Reaktor mit 10 bis 100 Gew.-%, vorzugsweise maximal 70 Gew.-%, der zur äquimolaren Veresterung notwendigen Menge Alkohol bei Temperaturen im Bereich von -5 bis 35 °C innerhalb einer Verweilzeit von mindestens 5 Sekunden, wobei die Durchmischung mittels des sich bildenden Chlorwasserstoffes erfolgt,
b) in einer zweiten Stufe das erhaltene Produktgemisch in einer Kolonne mit bis zu 90 Gew.-%, vorzugsweise mindestens 30 Gew.-%, Alkohol im Gegenstrom umgesetzt und entstehender gasförmiger Chlorwasserstoff über Kopf abgeführt wird, wobei die Kolonne vorzugsweise mit Gasgeschwindigkeiten zwischen 0,1 und 2,5 m.s⁻¹ arbeitet und die Einspeisung des Produktgemisches aus der ersten Stufe beispielsweise einige theoretische Böden unterhalb des Kolonnenkopfes und die Einspeisung des Alkohols mindestens fünf theoretische Böden über dem Kolonnensumpf erfolgt, wobei zwischen den beiden Einspeisstellen mindestens 15 theoretische Böden liegen sollten, und anschließend das Veresterungsprodukt
c) in einer dritten Stufe in einem Mischreaktor mit Alkalilauge unter Einhaltung eines Mol.-verhältnisses von Alkalihydroxid zu Ester von mindestens 1, bei oder nahezu bei Rückflußtemperatur umgesetzt, wobei überschüssiger Alkohol abgetrennt und der ersten Stufe zugeführt wird.

In der ersten Verfahrensstufe werden Organotrichlorsilan, vorzugsweise Methyl-, Ethyl- und/oder Propyltrichlorsilan, und Alkohol, vorzugsweise Methanol oder Ethanol, kontinuierlich in einen Reaktor, wie z.B. in einen Rohr- oder einen Schlaufenreaktor, unter Einhaltung einer Verweilzeit von mindestens 5 Sekunden, vorzugsweise 30 bis 60 Sekunden, dosiert, wobei sich bildender Chlorwasserstoff für eine ausreichende Durchmischung sorgt. Es stellt sich eine konstante Reaktionstemperatur im Bereich von -5 bis 35 °C ein, welche von der Art der eingesetzten Stoffe, wie z.B. dem Wasseranteil im Alkohol, dem Verhältnis Organotrichlorsilan zu Alkohol und dem Wärmeaustausch des Reaktors mit der Umgebung abhängig und somit gut zur technischen Kontrolle der Reaktionsparameter geeignet ist. Der Anteil des einzusetzenden Alkohols beträgt 10 bis 100 Gew.-%, vorzugsweise maximal 70 Gew.-%, der für eine äquimolare Umsetzung erforderlichen Menge. Technisch und/oder verfahrensbedingt kann der Alkohol bis zu 15 Gew.-% Wasser, bevorzugt 5 bis 10 Gew.-%, enthalten. Wassergehalte oberhalb 15 Gew.-% sollten vermieden werden, da der Gehalt an monomeren Organotrialkoxysilanen im Veresterungsprodukt abgesenkt wird und die Möglichkeit der Bildung von Gelen steigt. Es erfolgt jedoch kein Wasserzusatz.

Das die erste Stufe verlassende Produktgemisch, bestehend aus total und/oder partiell veresterten Produkten und gelöstem Chlorwasserstoff wird in einer zweiten Stufe in einer Kolonne, die analog einer Destillationskolonne aufgebaut ist und vorzugsweise mit Gasgeschwindigkeiten zwischen 0,1 und 2,5 m.s⁻¹, z. B. von 0,5 bis 1,5 m.s⁻¹, arbeitet, mit der für die äquimolare Veresterung erforderlichen restlichen Menge Alkohol, bis zu 90 Gew.-%, bevorzugt mindestens 30 Gew.-%, umgesetzt. Die Reaktion erfolgt im Gegenstrom dadurch, daß das Produktgemisch aus der ersten Stufe einige theoretische Böden unterhalb des Kolonnenkopfes und die jeweilige Menge Alkohol mindestens fünf Böden über dem Kolonnensumpf eingespeist wird. Zur vollständigen Desorption des Chlorwasserstoffes aus dem Organotrialkoxysilan sollten zwischen den Einspeisstellen mindestens 15 theoretische Böden liegen. Falls in der ersten Stufe mit 100 Gew.-% der für eine äquimolare Umsetzung erforderlichen Menge Alkohol gearbeitet wird, erfolgt in Stufe b) die Ausgasung des restlichen Chlorwasserstoffes.
Die Kolonne kann mit totalem Rücklauf gefahren werden. Damit vereinfacht sich der Alkoholkreislauf des erfindungsgemäßen Verfahrens wesentlich und die Bildung tangentazeotroper Gemische, die bekanntermaßen bei der Umsetzung von Methyltrichlorsilan mit Methanol entstehen, ist nicht von Bedeutung. Vorteilhafterweise läßt sich die äquimolare Reaktion über die Dosiermengen regeln, wenn als Sumpftemperatur die Siedetemperatur des veresterten Produktes und als Kopftemperatur der Kolonne die Siedetemperatur des azeotropen Ester-Alkohol-Gemisches gewählt wird.
Der nach dem Kopfkühler der Kolonne kontinuierlich anfallende Chlorwasserstoff kann beispielsweise mittels Solekühlung, Tröpfchenabscheidung und Gaswäsche von gegebenenfalls mitgerissenen Organotrialkoxysilan und Alkohol gereinigt werden.

Als Produkte werden vorrangig monomere Organotrialkoxysilane mit einem Chlorgehalt kleiner 1 Gew.-% erhalten. Zur weiteren Erniedrigung des Chlorgehaltes ist es möglich, das Veresterungsprodukt vor der Umsetzung mit Alkalilauge mit dem entsprechenden Alkoholat, wie z.B. Natrium- oder Kaliumalkoholat, in Kontakt zu bringen, beispielsweise in einem Mischreaktor, und anschließend das enstandene Salz abzutrennen.

Das erhaltene Veresterungsprodukt wird in einem dritten Schritt mit Alkalilauge, vorzugsweise Natron- oder Kalilauge, unter Einhaltung eines Mol.-verhältnisses von Alkalihydroxid zu Ester von mindestens 1, in einem Reaktor mit intensiver Durchmischung, wie z.B. einen statischen Mischer oder ein Rührgefäß, umgesetzt. Die Reaktion ist in wenigen Minuten durchführbar. Die maximale Verweilzeit beträgt vorzugsweise ca. 20 Minuten, wobei der Endpunkt bei 100%igem Umsatz erreicht ist und über die Dosiermengen gesteuert werden kann. Die bei der Umsetzung freiwerdende Energie kann entweder durch Rückflußkühlung, die Rückflußtemperatur liegt zwischen üblicherweise bei 50 und 75 °C, oder durch Kühlung des Reaktionsgemisches abgeführt werden, indem die Temperatur bei-spielsweise 2 bis 5 K weniger als die Rückflußtemperatur beträgt. Zwar ist die Umsetzung auch bei niedrigeren Temperaturen durchführbar, jedoch auf Grund des steigenden Kühlmittelaufwandes ökonomisch nicht sinnvoll. Die Konzentration der Alkalilauge richtet sich nach der gewünschten Festkörperkonzentration und liegt üblicherweise zwischen 20 und 60 Gew.-%, vorzugsweise bei etwa 30 Gew.-% Alkalihydroxid. Eine Verringerung des Mol.-verhältnisses von Alkalihydroxid zu Ester kleiner 1 ergibt Produkte, die nicht mehr mit Wasser in jedem Verhältnis mischbar sind, weiterhin besteht die Möglichkeit der Gelbildung.

Zur Entfernung des Alkohols, wird das Reaktionsgemisch in eine Kolonne eingespeist. Am Sumpf wird die wäßrige Alkali-Alkylsiliconatlösung entnommen, deren Reinheit von der erreichten Trennleistung der Kolonne abhängig ist. Alkali-Alkylsiliconat-Konzentrationen oberhalb 75 Gew.-% während der Destillation sollten wegen des Auftretens starker Schaumbildung vermieden werden. Der über Kopf anfallende Alkohol enthält verfahrensbedingt zwischen 5 und 10 Gew.-% Wasser und wird in die erste Stufe zur Veresterung zurückgeführt.

Die erfindungsgemäß hergestellten wäßrigen Alkali-Alkylsiliconatlösungen sind klar und beliebig mit Wasser mischbar.

Das erfindungsgemaße Verfahren ist kontinuierlich und abproduktfrei durchführbar. Die erhaltenen wäßrigen Alkali-Alkylsiliconatlösungen sind praktisch chlorfrei, klar und in jeder beliebigen Konzentration verwendbar.

### Ausführungsbeispiele

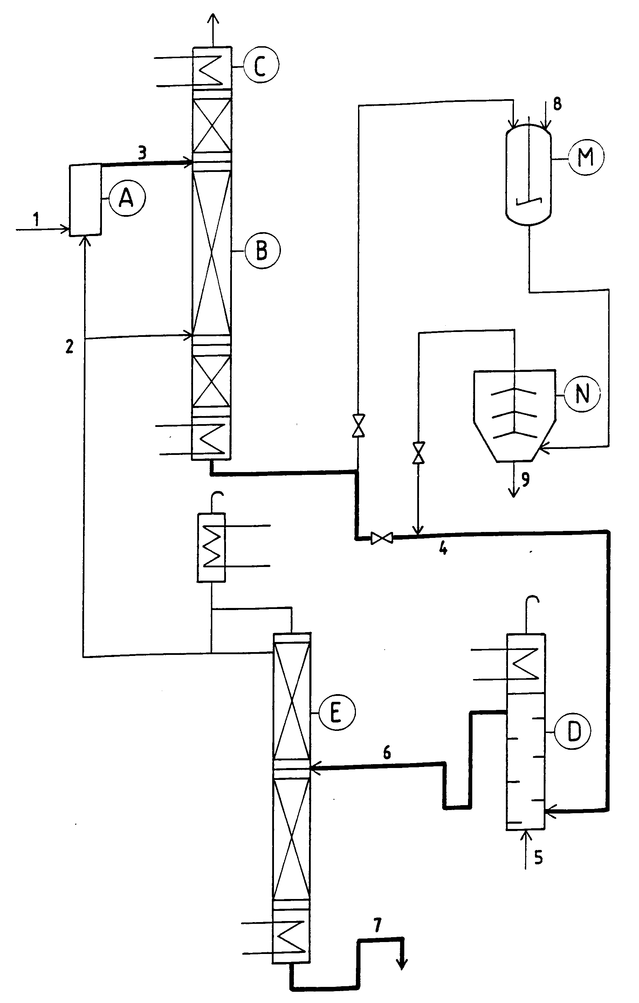

### Allgemeine Durchführung des Verfahrens (s. Zeichnung 1)

a) Organochlorsilan (Strom 1) und Alkohol (Strom 2) werden im gewünschten Mol-Verhältnis kontinuierlich in einen Schlaufenreaktor (A) dosiert, wobei die Verweilzeit mindestens 5 s beträgt und der sich bildende Chlorwasserstoff eine ausreichende Durchmischung gewährleistet. Dabei stellt sich eine konstante Reaktionstemperatur ein, die vom Mol-Verhältnis Organochlorsilan zu Alkohol und dem Wasseranteil im Alkohol abhängig ist. Das anfallende Produktgemisch enthält noch Chlorwasserstoff.
b) Es wird in eine Kolonne (B) geführt, die mit einem Kühler (C) zur Kondensation von mitgerissener Reaktionsmischung ausgestattet ist. Zur Erreichung der für die Umsetzung notwendigen Reaktionszeit arbeitet die Kolonne mit Gasgeschwindigkeiten zwischen 0,1 und 2,5 m.s⁻¹. Die Reaktion erfolgt im Gegenstrom. Das aus a) erhaltene Produkt (Strom 3) wird unterhalb des Kolonnenkopfes und der für eine äquimolare Umsetzung fehlende, restliche Alkohol (Strom 2) mindestens fünf Böden über dem Kolonnensumpf eingespeist. Zwischen den Einspeisstellen liegen mindestens 15 theoretische Böden.
   Soll das Veresterungsprodukt praktisch chlorfrei sein, wird es mit Alkali-Alkoholat (Strom 8) in einem Rührkessel (M) umgesetzt und entstehendes Alkalichlorid (Strom 9) über ein Filter (N) abgetrennt.
c) Das aus b) erhaltene und ggf. mit Alkali-Alkoholat umgesetzte Organotrialkoxysilan (Strom 4) wird gemeinsam mit Alkalilauge (Strom 5) in einen Reaktor mit intensiver Durchmischung (D) dosiert. Beide Reaktanten werden im Gleichstrom geführt, die Verweilzeit beträgt maximal ca. 20 Minuten. Es wird entweder bei Rückflußtemperatur oder kurz unterhalb dieser gearbeitet, wobei im letzteren Fall auf Grund der exothermen Reaktion das Reaktionsgemisch zu kühlen ist.

Zur Entfernung des Alkohols wird das erhaltene Reaktionsgemisch (Strom 6) in die Mitte einer Kolonne (E) eingespeist. Am Kopf der Kolonne wird Alkohol mit einem, vom Verfahren tolerierbaren Wasseranteil bis 15 Gew.-% abgenommen und wieder zur Veresterung in der ersten Stufe (Strom 2) eingesetzt. Am Sumpf wird die gewünschte wäßrige Alkali-Alkylsiliconatlösung (Strom 7) erhalten.

### Beispiel 1

In einem Schlaufenreaktor (A) wurden 1,5 mol Methanol (Strom 2), welches 0,5 Gew.-% Wasser enthielt, und 1 mol Methyltrichlorsilan (Strom 1) dosiert, wobei sich eine Temperatur von -5 °C einstellte.

Das erhaltene Produkt wurde in die Kolonne (B) eingespeist und im Gegenstrom über 20 theoretische Böden mit weiteren 1,5 mol Methanol (Strom 2) bei einer Sumpftemperatur oberhalb 100 °C, einer Kopftemperatur unterhalb 65 °C und unter totalem Rücklauf umgesetzt. Erhalten wurde ein Methyltrimethoxysilan (Strom 4), das noch 0,5 Gew.-% Rest-Cl enthielt.

Zur vollständigen Entfernung des Rest-Cl wurde Natriummethylat (Strom 8) im Rührkessel (M) bis zu pH 10 zugesetzt und gebildetes Natriumchlorid (Strom 9) abgetrennt.

1 Mol des nun chlorfreien Methyltrimethoxysilans (Strom 4) und 1,1 mol 30 %ige Kalilauge (Strom 5) wurden in den statischen Mischer (D) dosiert und bei einer Rückflußtemperatur von ca. 58 °C umgesetzt. Die Verweilzeit im statischen Mischer (D) betrug durchschnittlich 10 Minuten.

Das Produktgemisch wurde in der Kolonne (E) getrennt. Erhalten wurden 3 mol Methanol mit einem Wassergehalt von 1 Gew.-%, sowie eine 52 %ige wäßrige Kalium-Methylsiliconatlösung (Strom 7).

Die Kalium-Methylsiliconatlösung war klar und ließ sich problemlos mit Wasser verdünnen. Sie enthielt 21,2 Gew.-% K₂O und 28,2 Gew.-% Methylsilicon (MeSiO_{3/2}-Gehalt).

### Beispiel 2

Im Schlaufenreaktor (A) wurden 1,5 mol Methanol (Strom 2), das 6 Gew.-% Wasser enthielt, und 1 mol Methyltrichlorsilan (Strom 1) dosiert. Es stellte sich eine Reaktionstemperatur von 18 °C ein.

Das erhaltene Produkt wurde in der Kolonne (B) über 20 theoretische Böden im Gegenstrom mit weiteren 1,5 mol Methanol (Strom 2) bei einer Sumpftemperatur oberhalb 105 °C, einer Kopftemperatur unterhalb 65 °C und unter totalem Rücklauf umgesetzt. Erhaltenen wurde ein Methyltrimethoxysilan (Strom 4) mit 0,32 Gew.-% Rest-Cl.

1 mol des erhaltenen Methyltrimethoxysilans (Strom 4) und 1 mol 20 %ige Natronlauge (Strom 5) wurden in das Rührgefäß (D) dosiert und bei einer Temperatur von ca. 55 °C (3 K unterhalb der Rückflußtemperatur) umgesetzt. Die durchschnittliche Verweilzeit im Rührgefäß betrug 20 Minuten.

Das im Reaktionsgemisch enthaltene Methanol (0,5 Gew.-% Wasser) wurde in der Kolonne (E) abdestilliert und konnte wieder zur Veresterung in den Schlaufenreaktor zurückgeführt werden (Strom 2). Als Endprodukt wurde eine 38,1 %ige wäßrige Natrium-Methylsiliconatlösung (Strom 7) erhalten.

Die Kalium-Methylsiliconatlösung war klar und ließ sich problemlos mit Wasser verdünnen. Sie enthielt 12 Gew.-% Na₂O und 26,1 Gew.-% Methylsilicon (MeSiO_{3/2}-Gehalt).

### Aufstellung der verwendeten Bezugszeichen

- 1: Organochlorsilan
- 2: Alkohol
- 3: teilverestertes Produkt
- 4: Organotrialkoxysilan
- 5: Alkalilauge
- 6: Reaktionsgemisch
- 7: wäßrige Alkali-Alkylsiliconatlösung
- 8: Alkalialkoholat
- 9: Alkalichlorid
- A: Schlaufenreaktor
- B: Kolonne
- C: Kühler
- D: Mischreaktor
- E: Kolonne
- M: Mischreaktor
- N: Filter

## Patentansprüche

1. Verfahren zur kontinuierlichen Herstellung wäßriger Alkali-Alkylsiliconatlösungen, ausgehend von Organotrichlorsilanen, dadurch gekennzeichnet, daß
a) in einer ersten Stufe Organotrichlorsilan in einem Reaktor mit 10 bis 100 Gew.-% der zur äquimolaren Veresterung notwendigen Menge Alkohol bei Temperaturen im Bereich von -5 bis 35 °C innerhalb einer Verweilzeit von mindestens 5 Sekunden umgesetzt wird, wobei die Durchmischung mittels des sich bildenden Chlorwasserstoffes erfolgt,
b) in einer zweiten Stufe das erhaltene Produktgemisch in einer Kolonne mit bis zu 90 Gew.% Alkohol im Gegenstrom umgesetzt und entstehender gasförmiger Chlorwasserstoff über Kopf abgeführt wird, und anschließend das Veresterungsprodukt
c) in einer dritten Stufe in einem Mischreaktor mit Alkalilauge unter Einhaltung eines Mol.-verhältnisses von Alkalihydroxid zu Ester von mindestens 1, bei oder nahezu bei Rückflußtemperatur umgesetzt, überschüssiger Alkohol abgetrennt und in die erste Stufe zurückgeführt wird.

2. Verfahren gemäß Anspruch 1, dadurch gekennzeichnet, daß in der zweiten Stufe die Einspeisung des Produktgemisches aus der ersten Stufe einige theoretische Böden unterhalb des Kolonnenkopfes und die Einspeisung des Alkohols mindestens fünf theoretische Böden über dem Kolonnensumpf erfolgt, wobei zwischen den beiden Einspeisstellen mindestens 15 theoretische Böden liegen.

3. Verfahren gemäß Anspruch 1, dadurch gekennzeichnet, daß dem aus der zweiten Stufe erhaltenen Veresterungsprodukt vor der Umsetzung in der dritten Stufe in einem Mischreaktor Alkali-Alkoholat zugesetzt und gebildetes Salz abgetrennt wird.

4. Verfahren gemäß Anspruch 1, dadurch gekennzeichnet, daß in der ersten Stufe maximal 70 Gew.-% der zur äquimolaren Veresterung notwendigen Menge Alkohol eingesetzt wird.

5. Verfahren gemäß Anspruch 1, dadurch gekennzeichnet, daß in der zweiten Stufe mindestens 30 Gew.-% der zur äquimolaren Veresterung notwendigen Menge Alkohol eingesetzt wird.

6. Verfahren gemäß den Ansprüchen 1, 4 und 5, dadurch gekennzeichnet, daß der Alkohol technisch und/oder verfahrensbedingt Wasser enthält.

7. Verfahren gemäß Anspruch 6, dadurch gekennzeichnet, daß der Alkohol bis zu 15 Gew.-% technisch und/oder verfahrensbedingt Wasser enthält.

8. Verfahren gemäß Anspruch 7, dadurch gekennzeichnet, daß der Alkohol 5 bis 10 Gew.-% technisch und/oder verfahrensbedingt Wasser enthält.

9. Verfahren gemäß Anspruch 1, dadurch gekennzeichnet, daß als Organotrichlorsilan Methyltrichlorsilan eingesetzt wird.

10. Verfahren gemäß Anspruch 1, dadurch gekennzeichnet, daß als Organotrichlorsilan Ethyl- oder Propyltrichlorsilan eingesetzt wird.

11. Verfahren gemäß Anspruch 1, dadurch gekennzeichnet, daß als Alkohol Methanol eingesetzt wird.

12. Verfahren gemäß Anspruch 1, dadurch gekennzeichnet, daß als Alkohol Ethanol eingesetzt wird.

13. Verfahren gemäß Anspruch 1, dadurch gekennzeichnet, daß Alkalilauge einer Konzentration von 20 bis 60 Gew.-% Alkalihydroxid eingesetzt wird.

14. Verfahren gemäß Anspruch 15, dadurch gekennzeichnet, daß Alkalilauge einer Konzentration von 30 Gew.-% Alkalihydroxid eingesetzt wird.

15. Verfahren gemäß Anspruch 1, dadurch gekennzeichnet, daß als Alkalilauge Natronlauge eingesetzt wird.

16. Verfahren gemäß Anspruch 1, dadurch gekennzeichnet, daß als Alkalilauge Kalilauge eingesetzt wird.
